# FASCICULE DE BREVET EUROPEEN

(11) **EP 3 069 937 B1**
(45) Date de publication et mention de la délivrance du brevet: **02.08.2017**
(21) Numéro de dépôt: 16158094.9
(22) Date de dépôt: 01.03.2016
(51) Int. Cl.: B60R 13/02, B60R 22/20

(54) **DISPOSITIF DE GARNITURE INTERIEURE D'UN PIED MILIEU DE LA CAISSE D'UN VEHICULE AUTOMOBILE**
INNENEINLAGEVORRICHTUNG EINER B-SÄULE EINES KRAFTFAHRZEUGAUFBAUS
INTERIOR TRIM DEVICE OF A CENTRE PILLAR OF THE BODY OF A MOTOR VEHICLE

(30) Priorité: 19.03.2015 FR 1552285
(43) Date de publication de la demande: 21.09.2016
(73) Titulaire: EUROSTYLE SYSTEMS, 36000 Châteauroux (FR)
(72) Inventeur: BEAUJARD, Serge Joël, 36400 LA CHATRE (FR); TISSIER, Pascal Henri, 36250 NIHERNE (FR)
(74) Mandataire: Thinat, Michel

(56) Documents cités:
- FR-A1- 2 942 603
- JP-A- 2000 071 897
- US-A1- 2013 313 848

## Description

L'invention concerne un dispositif de garniture intérieure d'un pied milieu de la caisse d'un véhicule automobile, comportant une plaque formant rideau montée coulissante sur la face interne de la garniture, pour un dispositif de réglage de la position en hauteur de l'organe de renvoi d'une ceinture de sécurité.

Les garnitures de ce type sont en général livrées lors de la fabrication du véhicule, au poste d'assemblage au pied de la carrosserie du véhicule, avec la plaque de rideau déjà reliée à la garniture. Le document FR 2 942 603 A1 montre un dispositif de garniture intérieur selon le préambule de la revendication 1. Or, lors du transfert au lieu d'assemblage, la plaque peut se déplacer sur la garniture et même se perdre, ce qui présente un grand inconvénient.

L'invention a pour but de pallier cet inconvénient.

Pour atteindre ce but, le dispositif de garniture intérieure selon l'invention est caractérisé en ce que la plaque de rideau est fixée par un organe d'attache cassable à la garniture dans sa position haute, qui est adaptée pour être rompue après l'assemblage de la garniture sur le pied de la caisse de véhicule.

Selon une caractéristique de l'invention, le dispositif de garniture est caractérisé en ce que la position dans laquelle la plaque de rideau est fixée à la garniture par l'organe d'attache est sa position lors de l'assemblage de la garniture sur le pied.

Selon une autre caractéristique de l'invention, le dispositif de garniture est caractérisé en ce que l'organe d'attache est fixé, par une extrémité, au bord supérieur de la plaque de rideau et, par son autre extrémité, à un pion sur la face interne de la garniture, situé au-dessus de la plaque de rideau.

Selon encore une caractéristique de l'invention, le dispositif de garniture est caractérisé en ce que le pion est soudé sur la face interne de la garniture.

Selon encore une caractéristique de l'invention, le dispositif de garniture est caractérisé en ce que l'organe d'attache comporte, entre ses deux extrémités de fixation, une partie en forme d'une languette qui est pourvue d'une zone de rupture d'une épaisseur prédéterminée.

Selon encore une caractéristique de l'invention, le dispositif de garniture est caractérisé en ce que la zone de rupture de la languette est adaptée pour ne pas rompre lors de l'assemblage de la garniture sur le pied de caisse du véhicule, mais de rompre lors de la première opération de réglage de la hauteur de l'organe de renvoi sous l'effet de l'effort de traction exercé sur l'organe de renvoi.

Selon encore une caractéristique de l'invention, le dispositif de garniture est caractérisé en ce que la plaque de rideau est en appui dans sa position haute attachée à la garniture par l'organe d'attache, par son bord supérieur contre un organe de butée sur la face interne de la garniture.

L'invention sera mieux comprise, et d'autres buts, caractéristiques, détails et avantages de celle-ci apparaîtront plus clairement dans la description explicative qui va suivre faite en référence aux dessins annexés donnés uniquement à titre d'exemple illustrant un mode de réalisation de l'invention et dans lesquels :

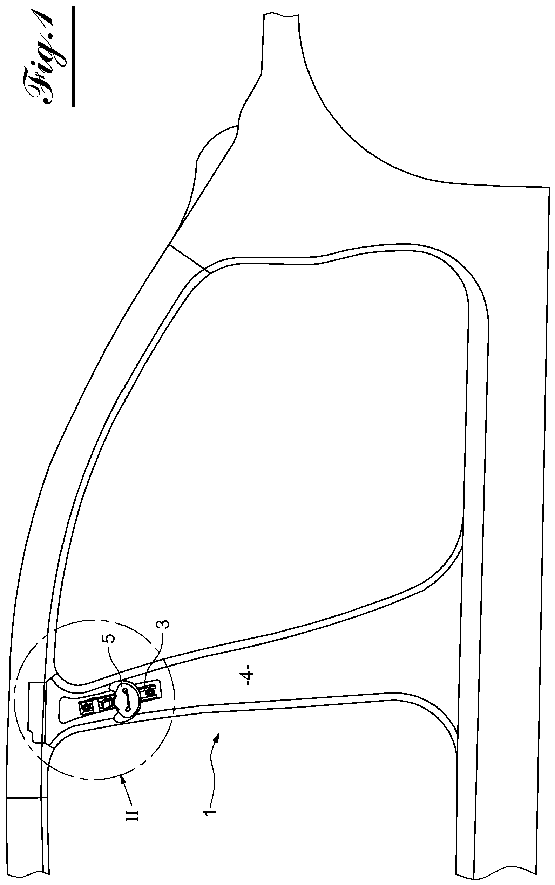

- La figure 1 est une vue latérale d'un pied de milieu de la caisse d'un véhicule automobile ;
- La figure 2 est une vue à plus grande échelle de la partie II entourée d'un cercle sur la figure 1 ;
- La figure 3 est une vue sur la face extérieure de la garniture montée sur le pied milieu supérieur du véhicule, de la figure 2 ;
- La figure 4 est une vue sur la face interne de la garniture et de la plaque de rideau montée sur la face interne dans sa position haute dans laquelle elle est attachée à la garniture, conformément à l'invention ;
- La figure 5 est une vue de la face externe de la garniture et du rideau dans sa position de la figure 4 ;
- La figure 6 est une vue en perspective du rideau monté sur la face interne de la garniture, selon la figure 4 ;
- La figure 7 est une vue à plus grande échelle de la partie VII de la figure 6, montrant l'organe d'attache après la mise en place de la garniture ;
- La figure 8 est une vue correspondant à la figure 7, mais montrant l'organe d'attache après sa mise en place sur la garniture et à l'état ;
- La figure 9 est une vue latérale de l'organe d'attache de la figure 8.

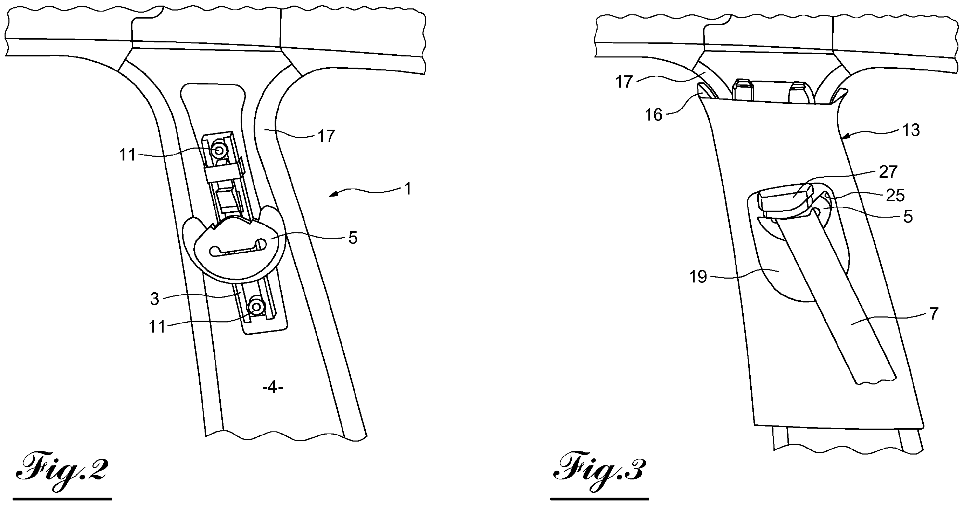

La figure montre en 1 la partie supérieure d'un pied milieu d'une caisse de véhicule et en 3 le rail de guidage fixé sur la face interne 4 du pied et l'organe 5 de renvoi de sangle de ceinture de sécurité 7 que l'on voit sur la figure 3. Le rail de guidage 3 est fixé sur la face interne du pied par des vis 11 et l'organe de renvoi 5 est monté déplaçable le long du rail et peut être immobilisé et verrouillé sur ce rail dans toute position souhaitée par un dispositif de verrouillage connu en soi. Grâce à sa faculté de coulisser le long du rail, la position en hauteur de l'organe de renvoi est réglable.

La figure 3 illustre la surface externe d'une garniture intérieure 13, montée sur la face interne du pied 1 en enfermant donc le rail de guidage 3 et l'organe de renvoi 5. On voit sur la figure que les bords longitudinaux 16 de la garniture sont recourbés pour venir en prise sur les joints de porte positionnés sur les bords longitudinaux 17 du pied.

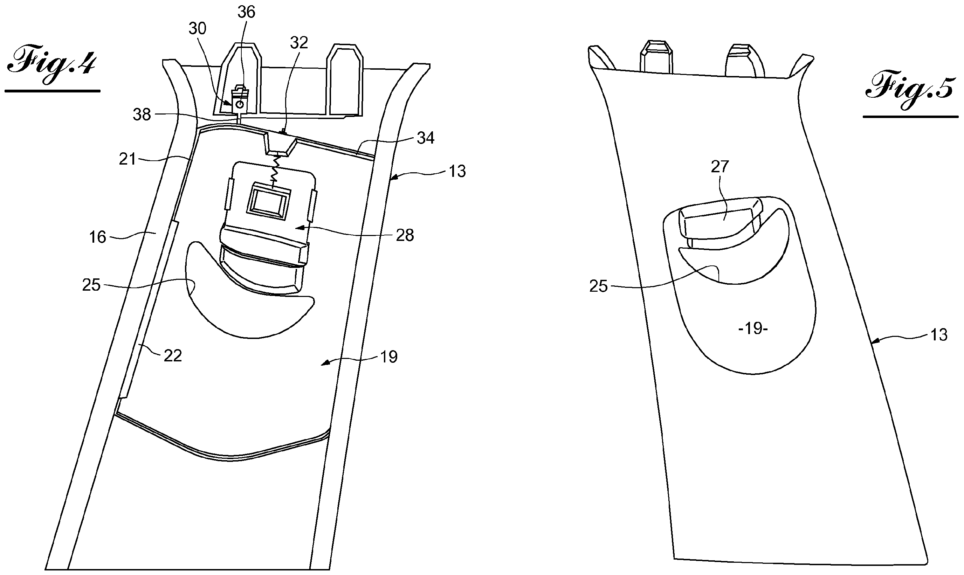

La figure 4 représente la face intérieure de la garniture et une plaque formant rideau 19 pour le dispositif de réglage de la position de l'organe de renvoi 5. Le rideau 19 est susceptible de coulisser sur la garniture 13 dans la direction axiale de celle-ci. A cette fin, les bords longitudinaux 21 du rideau s'engagent dans des glissières 22 le long des bords recourbés 16 de la garniture. Le rideau comporte une ouverture 25 de passage d'une partie de l'organe de renvoi 5 de la ceinture 7 et de cette dernière.

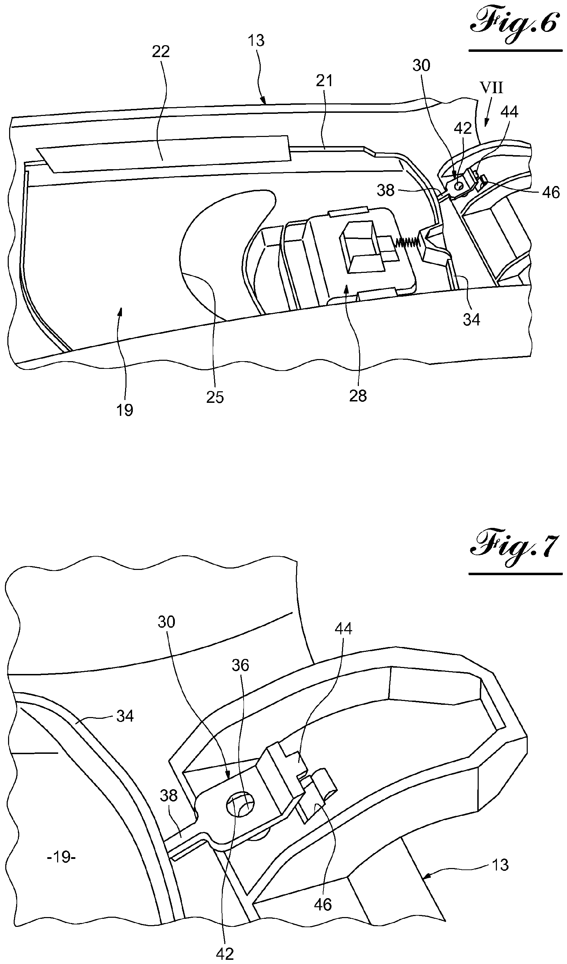

La figure 5 montre la face extérieure de la garniture 13 et du rideau 19 et on constate en 27 la partie extérieure du dispositif d'actionnement du mécanisme de verrouillage et de déverrouillage de l'organe de renvoi sur le rail. La partie intérieure est visible sur la figure 6 en 28.

Etant donné que la configuration de ce mécanisme ne fait pas l'objet de l'invention, il ne sera pas décrit ci-après.

Par contre, l'invention concerne notamment le montage du rideau 19 sur la garniture 13. Ces garnitures sont livrées au lieu d'assemblage du véhicule et donc de la garniture sur le pied milieu de la caisse, avec le rideau déjà monté sur la garniture.

Pour éviter que le rideau se perde ou se déplace accidentellement sur la garniture lors du transport ou lors de l'assemblage, ce qui nécessiterait au poste d'assemblage un réajustement de la position du rideau 19 sur la garniture 13, l'invention propose d'attacher le rideau par un organe 30 d'attache à la garniture dans sa position haute, c'est-à-dire la position qu'elle doit avoir lors du montage de la garniture 13 sur le pied 1. Pour que la position du rideau soit bien définie sur la garniture, cette dernière est pourvue d'un ergot de butée 32 contre lequel le bord supérieur transversal 34 du rideau est en appui. Ainsi la position du rideau lors de l'assemblage de la garniture sur le pied milieu 1 est assurée à la fois par l'organe d'attache 30 et par l'ergot de butée 32.

Comme on le voit sur les figures 7 à 9, l'organe d'attache 30 est fixé, d'une part, au bord supérieur 34 du rideau et, d'autre part, à un pion 36 sur la face interne de la garniture, situé au dessus du rideau. Ce pion pourrait être fixé sur son support par soudage pour augmenter la tenue de l'attache 30.

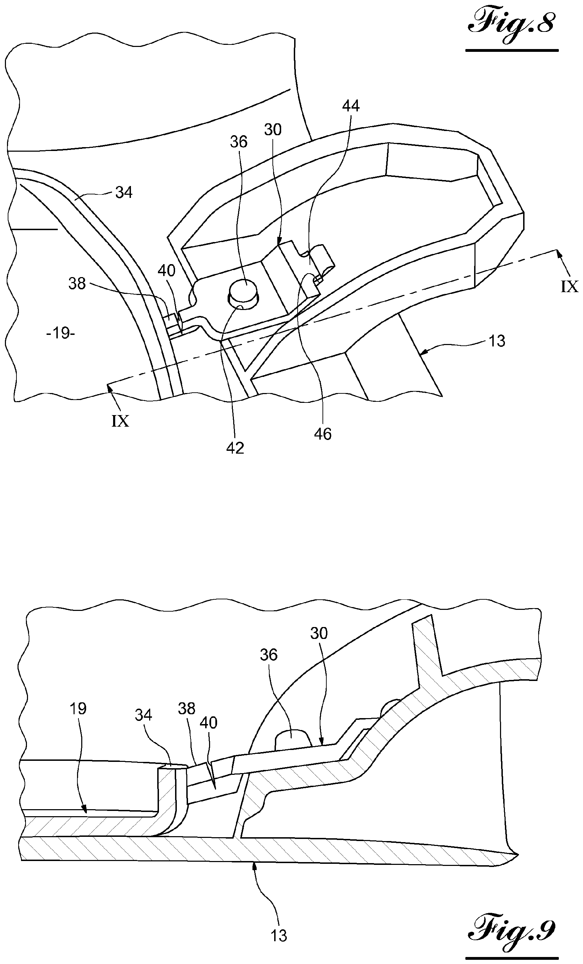

L'organe d'attache comporte, entre ces deux endroits de fixation une partie en forme d'une languette 38 pourvue d'une zone de rupture 40 d'une épaisseur prédéterminée. La figure 7 montre la languette dans son état après le montage du rideau 19 sur la garniture 13, mais avant l'assemblage de la garniture sur le pied milieu 1 de la caisse du véhicule. On constate que la languette est intacte. Les figures 8 et 9 illustrent la languette 38 avant son transport au lieu de l'assemblage de la garniture sur le pied de caisse. La languette est coupée jusqu'à une certaine épaisseur mais le rideau reste toujours attaché et immobilisé dans sa position haute. Ce n'est qu'après l'assemblage de la garniture sur le pied du véhicule, lors de la première opération du réglage de la hauteur de l'organe de renvoi 5 par le conducteur que la languette 38 sera rompue entièrement sous l'effet de la force de traction alors exercée sur l'organe 5 afin de le déplacer sur le rail 3, après l'avoir déverrouillé.

Concernant la fixation de l'organe d'attache 30 à la garniture, la partie de fixation comporte un trou 42 permettant l'engagement sur le pion 36 et une patte 44 s'éclipsant dans l'évidement complémentaire 46 de la garniture.

## Revendications

1. Dispositif de garniture intérieure d'un pied milieu de caisse (1) d'un véhicule automobile, comprenant une pièce formant garniture (13) destinée à être assemblée sur ledit pied (1), et une plaque formant rideau (19) montée coulissant sur la face interne de la garniture (13), pour un dispositif de réglage de la position en hauteur sur le pied d'un organe de renvoi (5) d'une ceinture de sécurité (7), **caractérisé en ce que** la plaque de rideau (19) est fixée par un organe d'attache (30) cassable à la garniture (13) dans sa position haute, qui est adapté pour être rompu après l'assemblage de la garniture sur le pied (1) de la caisse de véhicule.

2. Dispositif de garniture selon la revendication 1, **caractérisé en ce que** la position dans laquelle la plaque de rideau (19) est fixée à la garniture (13) par l'organe d'attache (30) est sa position lors de l'assemblage de la garniture (13) sur le pied (1).

3. Dispositif de garniture selon une des revendications 1 ou 2, **caractérisé en ce que** l'organe d'attache (30) est fixé, par une extrémité, au bord supérieur (34) de la plaque de rideau (19) et, par son autre extrémité, à un pion (36) sur la face interne de la garniture, situé au-dessus de la plaque de rideau.

4. Dispositif de garniture selon la revendication 3, **caractérisé en ce que** le pion (36) est soudé sur la face interne de la garniture.

5. Dispositif de garniture selon l'une des revendications 1 à 4, **caractérisé en ce que** l'organe d'attache (30) comporte, entre ses deux extrémités de fixation, une partie en forme d'une languette (38) qui est pourvue d'une zone de rupture (40) d'une épaisseur prédéterminée.

6. Dispositif de garniture selon la revendication 5, **caractérisé en ce que** la zone de rupture (40) de la languette est adaptée pour ne pas rompre lors de l'assemblage de la garniture sur le pied de caisse du véhicule, mais de rompre lors de la première opération de réglage de la hauteur de l'organe de renvoi (5) sous l'effet de l'effort de traction exercé sur l'organe de renvoi (5).

7. Dispositif de garniture selon l'une des revendications 1 à 6, **caractérisé en ce que** la plaque de rideau (19) est en appui dans sa position haute attachée à la garniture (13) par l'organe d'attache (30), par son bord supérieur (34) contre un organe de butée (32) sur la face interne de la garniture.

## Patentansprüche

1. Inneneinlagevorrichtung einer B-Säule eines Aufbaus (1) eines Kraftfahrzeugs, umfassend ein eine Einlage (13) bildendes Teil, das bestimmt ist, auf der Säule (1) montiert zu sein, und eine einen Vorhang (19) bildende Platte, die gleitend auf der Innenseite der Einlage (13) montiert ist, für eine Einstellvorrichtung der Höhenposition auf der Säule eines Umlenkorgans (5) eines Sicherheitsgurts (7), **dadurch gekennzeichnet, dass** die Vorhangplatte (19) mittels eines zerbrechbaren Befestigungsorgans (30) an der Einlage (13) in ihrer hohen Position befestigt ist, das ausgebildet ist, um nach Befestigen der Einlage auf der Säule (1) des Aufbaus des Fahrzeugs zu zerbrechen.

2. Einlagevorrichtung nach Anspruch 1, **dadurch gekennzeichnet, dass** die Position, in welcher die Vorhangplatte (19) an der Einlage (13) mittels des Befestigungsorgans (30) befestigt ist, ihre Position bei der Befestigung der Einlage (13) auf der Säule (1) ist.

3. Einlagevorrichtung nach einem der Ansprüche 1 oder 2, **dadurch gekennzeichnet, dass** das Befestigungsorgan (30) mit einem Ende am oberen Rand (34) der Vorhangplatte (19) und mit seinem anderen Ende an einem Vorsprung (36) auf der Innenseite der Einlage über der Vorhangplatte befestigt ist.

4. Einlagevorrichtung nach Anspruch 3, **dadurch gekennzeichnet, dass** der Vorsprung (36) auf die Innenseite der Einlage geschweißt ist.

5. Einlagevorrichtung nach einem der Ansprüche 1 bis 4, **dadurch gekennzeichnet, dass** das Befestigungsorgan (30) zwischen seinen beiden Befestigungsenden einen Teil in Form einer Zunge (38) aufweist, die mit einem Bruchbereich (40) einer vorbestimmten Dicke ausgestattet ist.

6. Einlagevorrichtung nach Anspruch 5, **dadurch gekennzeichnet, dass** der Bruchbereich (40) der Zunge ausgebildet ist, um bei der Befestigung der Einlage auf der Säule des Aufbaus des Fahrzeugs nicht zu zerbrechen, sondern beim ersten Einstellvorgang der Höhe des Umlenkorgans (5) unter der Wirkung der auf das Umlenkorgan (5) ausgeübten Zugkraft zu zerbrechen.

7. Einlagevorrichtung nach einem der Ansprüche 1 bis 6, **dadurch gekennzeichnet, dass** sich die Vorhangplatte (19) in ihrer hohen Position, befestigt an der Einlage (13) mittels des Befestigungsorgans (30), mit ihrem oberen Rand (34) auf einem Anschlagorgan (32) auf der Innenseite der Einlage abstützt.

## Claims

1. An interior trim device of a center pillar (1) of the body of a motor vehicle, comprising a part forming trim (13) intended to be assembled on said center pillar (1), and a plate forming a curtain (19) mounted sliding on the inner face of the trim (13), for a device for adjusting the position, heightwise, on the center pillar of a return member (5) of a seatbelt (7), **characterized in that** the curtain plate (19) is fastened by a breakable fastening member (30) to the trim (13) in its high position, which is suitable for being broken after assembly of the trim on the center pillar (1) of the vehicle body.

2. The trim device according to claim 1, **characterized in that** the position in which the curtain plate (19) is fastened to the trim (13) by the fastening member (30) is its position during the assembly of the trim (13) on the center pillar (1).

3. The trim device according to one of claims 1 or 2, **characterized in that** the fastening member (30) is fastened, by one end, to the upper edge (34) of the curtain plate (19), and, by its other end, to a pin (36) on the inner face of the trim, situated above the curtain plate.

4. The trim device according to claim 3, **characterized in that** the pin (36) is welded on the inner face of the trim.

5. The trim device according to one of claims 1 to 4, **characterized in that** the fastening member (30) includes, between its two fastening ends, a tongue-forming part (38) that is provided with a breaking zone (40) having a predetermined thickness.

6. The trim device according to claim 5, **characterized in that** the breaking zone (40) of the tongue is suitable for not breaking during assembly of the trim on the center pillar of the vehicle, but breaking during the first operation to adjust the height of the return member (5) under the effect of the tensile strain exerted on the return member (5).

7. The trim device according to one of claims 1 to 6, **characterized in that** the curtain plate (19) is bearing, in its high position attached to the trim (13) by a fastening member (30), by its upper edge (34) against a stop member (32) on the inner face of the trim.
